# EUROPEAN PATENT SPECIFICATION

(11) **EP 0 611 501 B1**
(45) Date of publication and mention of the grant of the patent: **18.12.1996**
(21) Application number: 93900505.4
(22) Date of filing: 06.11.1992
(51) Int. Cl.: H04B 7/204

(54) **BEAM COMPENSATION METHODS FOR SATELLITE COMMUNICATION SYSTEM**
STRAHLKOMPENSATIONSVERFAHREN FÜR SATELLITENKOMMUNIKATIONSSYSTEM
PROCEDE DE COMPENSATION DE FAISCEAUX POUR SYSTEME DE TELECOMMUNICATIONS PAR SATELLITES

(30) Priority: 08.11.1991 US 790318
(43) Date of publication of application: 24.08.1994
(73) Proprietor: Teledesic Corporation, Dover, DE 19901 (US)
(72) Inventor: PATTERSON, David, Palmer, Los Altos, CA 94022 (US); STURZA, Mark, Alan, Woodland Hills, CA 91364 (US)
(74) Representative: Powell, Stephen David
(86) International application number: PCT/US92/09318
(87) International publication number: WO 93/09614

(56) References cited:
- GLOBECOM 1989 vol. 3, November 1989, DALLAS,US; pages 1115 - 1119 G.BARTOLUCCI ET AL 'A multibeam active antenna for an European contiguous coverage at KU- Band'
- IEEE TRANSACTIONS ON COMMUNICATIONS vol. 39, no. 1, January 1991, NEW-YORK,US; pages 141 - 151 ACAMPARA ET AL 'A metropolitan area radio system using scanning pencil beams'
- PROCEEDINGS OF THE IEEE vol. 78, no. 7, 1990, NEW-YORK,US; pages 1165 - 1175
- WRIGHT ET AL 'Advanced Communications Technology Satellite (ACTS) and Potential System Applications'

## Description

### CROSS-REFERENCES TO RELATED PATENT APPLICATIONS

The present patent application is related to the following patent applications:
WO 93/09613 -
Satellite Communication System, published 13 May 1993.

Method of Conducting a Telecommunications Business Implemented on a Computer by Edward Fenton Tuck, assigned United States Serial Number 07/895,295;
WO 93/09577 -
Terrestrial Antennas for Satellite Communication System; published 13 May 1993.
WO 93/09624 -
Switching Methods for Satellite Communication System; published 13 May 1993;
WO 93/09578 -
Spacecraft Antennas & Beam Steering Methods for Satellite Communication System; published 13 May 1993
WO-A-94/02972 -
Spacecraft Intersatellite Link for Satellite Communication System by Douglas Gene Lockie et al, published 3 February 1994.
WO 93/0-9029 -
Spacecraft Designs for Satellite Communication System, published 13 May 1993.

The specifications of the patent applications listed above are hereby identified by reference.

### DESCRIPTION OF THE INVENTION

### TECHNICAL FIELD

The present invention relates to the field of satellite communications. More particularly, this invention provides a method of assigning individual radio beams from a constellation of low Earth orbit satellites to delineated regions on the ground with fixed boundaries called "cells." This beam management system offers enhanced frequency coordination and communication reliability. The present invention substantially eliminates the problem of rapid "hand-offs" of a communication channel among the multiple beams of one satellite or between satellites as one satellite moves out of range of subscribers within the cell and another takes over to supply service to the cell.

### BACKGROUND ART

Current telephone services rely primarily on land lines and microwave repeaters to handle call traffic. Recent expansions of cellular networks have enhanced phone service by providing access to the land based system to customers using mobile phones in their vehicles or hand-held portable units. The increased capacity offered to the subscriber is relatively small compared to the number of subscribers using conventional fixed phones, since cellular service is limited to only those geographical regions that are densely populated. Cellular communication is often afflicted by poor performance when customers travel from one cell to another, or when they traverse the radio shadows projected by terrain or buildings.

One previous attempt to bypass the limits of conventional communications networks utilizes a transportable telephone that employs a satellite dish several feet in diameter to communicate directly with satellites in 22,300 mile geostationary orbits. The transponders on board these satellites then connect the caller directly to the land-based system, which directs their call through switches on the ground. These devices are heavy, difficult to transport, and are prohibitively expensive.

Public phone companies do not currently offer continuous world-wide service to subscribers using a mobile or portable phone without the use of costly and large antenna systems. Commercial spacecraft and transponders that are presently on orbit do not generally possess the power capacity to communicate directly with terminals that are not coupled to an antenna dish that are at least a few feet in diameter. The service which is available is extremely limited and too expensive for use by all but a few. The problem of providing an economically viable network for voice, data, and video which can be used by subscribers all over the world has presented a major challenge to the communications business. The development of a high power satellite system which can transmit and receive radio signals to portable, mobile, and fixed terminals on the land and sea and in the air without the intermediate steps of routing traffic through land-based equipment would constitute a major technological advance and would satisfy a long felt need within the electronics and telephone industries.

The Article "A Multibeam Active Antenna for an European Continuous Coverage at ku-band" Globecom 1989, Dallas U.S. pages 1115 to 1119, G. Bartolucci et al discloses a geostationary satellite covering Western Europe with a plurality of antennas transmitting and receiving beams from the earth.

### DISCLOSURE OF THE INVENTION

The Beam Compensation Methods disclosed and claimed in this patent application pertain to the allocation and deployment of radio beams which are generated by a constellation of satellites. These beams are precisely controlled so that they illuminate "Earth-fixed cells" as opposed to "satellite-fixed cells." In previous satellite communication schemes, spacecraft which are not held stationary over one particular location on the Earth in geo-synchronous orbits by over large regions of the Earth very rapidly. The radio beams generated by these fast moving spacecraft sweep across vast regions of the Earh's surface at the same rate of speed. If these beams were visible to the eye, they would paint bright circular and elliptical patches of light on the ground beneath the satellite which emitted them. In a system that employs satellite-fixed cells, the "footprint" of the radio beams propagated by the spacecraaft defines the zone on the ground called a "cell" which is illuminated by the spacecraft. This satellite-fixed cell moves constantly as the spacecraft moves around the globe. In sharp contrast, an "Earth-fixed cell" is a stationary region mapped onto the surface of the Earth that has permanent fixed boundaries, just like a city or a state. Although the rapidly moving satellites still shine their radio beams over the ground in rapidly moving footprints, the locations of the footprints at any given time do not determine the location of the unchanging Earth-fixed cells. The great advantage provided by using cells having boundaries that are fixed to the Earth is realized when a subscriber being served by one satellite must switch to another beam in the same satellite or to a second satellite because the first is moving out of range below the local horizon. With satellite-fixed cells, this "handover" involves the assignment to the terminal of a new communication channel within the new beam or new satellite. This assignment process takes time and consumes processing capacity at both the terminal and the satellite. It is also subject to blocking, call interruption, and call dropping if there is not an idle communication channel in the next serving beam or satellite. The Earth-fixed cell method avoids these problems by allocating communication channels (frequency, code, and/or time slot) on an Earth-fixed cell basis rather than on a satellite-fixed cell basis. Regardless of which satellite/beam is currently serving a particular cell, the terminal maintains the same channel assignment, thus eliminating, the "handover" problem.

The present invention is intended to be used in conjunction with the Spacecraft Antennas & Beam Steering Methods for Satellite Communication System, which is described in copending patent application WO 93/09578. This system comprises an advanced active element phased array antenna that utilizes electronic beam steering to provide extremely high gain signals. One of the preferred embodiments of the Spacecraft Antennas invention employs a hemispherical configuration of hexagonal antenna facets fabricated from ultra-light weight honeycomb materials and advanced composites. Gallium-arsenide (GaAS) millimeter wave integrated circuits (MMIC) coupled to each antenna panel handle call traffic. Each antenna simultaneously generates 256 beams which are electronically steered to 4,096 positions on the surface of the Earth. At any instance each individual beam illuminates a region on the ground called an "Earth-fixed cell". A beam illuminates each of the cells in the supercell on a predetermined sequence and time schedule. A four by four matrix of cells forms an "Earth-fixed supercell." The entire surface of the Earth is mapped into 80,000 Earth-fixed supercells.

An appreciation of other aims and objectives of the present invention and a more complete and comprehensive understanding of this invention may be achieved by studying the following description of a preferred embodiment and by referring to the accompanying drawings.

### BRIEF DESCRIPTION OF THE DRAWINGS

Figures 1, 2, and 3 present schematic illustrations that exhibit the relationships among the spherical surface of the Earth, a satellite footprint, an Earth-fixed super cell, an Earth-fixed cell, and radio beams emitted from a satellite that provide service for users within the earth-fixed cells.

Figure 4 is a schematic depiction showing one Earth-fixed supercell divided into sixteen Earth-fixed cells.

Figure 5 portrays coverage provided by satellite footprints in one of the preferred embodiments of the invention and the overlaps and gaps formed by these footprints at the equator.

Figure 6 portrays coverage provided by satellite footprints in one of the preferred embodiments of the invention and the overlaps and gaps formed by these footprints at a latitude of forty degrees.

Figure 7 is a schematic block diagram which discloses a hardware implementation of one of the preferred embodiments of the *Beam Compensation Method.* A string of information called a packet is shown as it progresses through mapping and switching hardware which allocates satellite beams to subscribers in Earth-fixed cells.

Figure 8 is perspective view of a satellite that is intended for use with the present invention. This satellite includes a hemispherical array of hexagonal antenna facets and fully extended rectangular solar panels.

Figure 9 depicts a schematic diagram of the satellite similar to the one illustrated in Figure 8. Figure 9 also reveals three sets of electronically steered beams produced by the hexagonal antennas and the circular and elliptical footprints which the beams illuminate on the Earth's surface.

Figure 10 presents a schematic depiction of the pattern of multiple beams generated by the satellite shown in Figures 8 and 9.

### BEST MODE FOR CARRYING OUT THE INVENTION

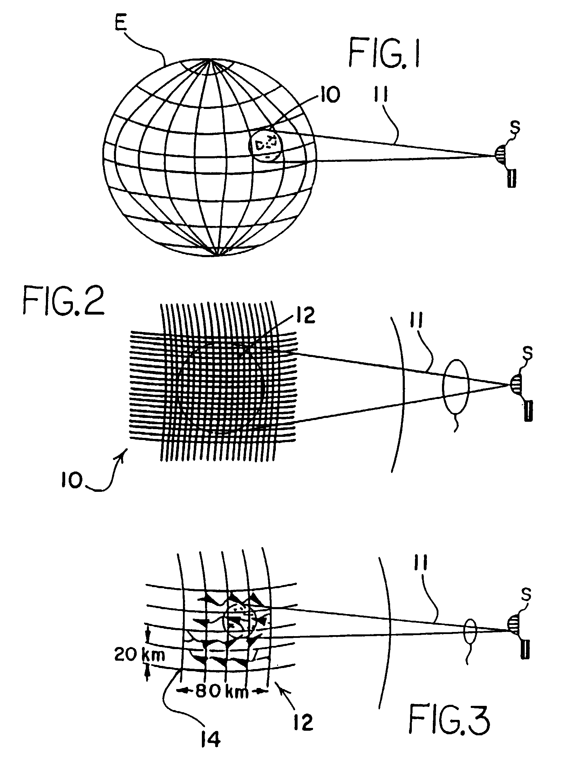

Figures 1, 2, and 3 present schematic illustrations that exhibit the relationships among the spherical surface of the Earth E, a satellite footprint 10, an Earth-fixed super cell 12, an Earth-fixed cell 14, and radio beams 11 emitted from a satellite S that provides service for users within the Earth-fixed cells 14. Figure 1 reveals the geometric and numerical relationships that have been established to implement beam compensation. The beams 11 emanating from a constellation of satellites S illuminate generally circular footprints 10 on the surface of the Earth E. These footprints 10, which have a radius of about 700 kilometers, are associated with a grid of approximately 80,000 Earth-fixed supercells 12 that span the entire globe. Each footprint 10 is served by 256 supercells 12. Each supercell 12 is divided into a four by four matrix comprising four Earth-fixed cells 14 on a side. Every Earth-fixed cell 14 is twenty kilometers wide and twenty kilometers high. There are approximately 1.28 million Earth-fixed cells 14 covering the surface of the world. The upper and lower boundaries of each Earth-fixed supercell 12 are parallel to lines of latitude. The Earth-fixed supercells 12 circle the Earth in bands, with the largest bands residing at the equator. The number of Earth-fixed supercells 12 in an Earth&cling band decreases toward the poles. Earth-fixed supercells 12 in adjacent bands are not necessarily aligned. In the text below, the terms "supercells" 12 and "cells" 14 are employed as a shorthand reference to the more technically correct terms "Earth-fixed supercells" 12 and "Earth-fixed cells" 14. The cells 14 and supercells 12 defined and utilized by the present invention are different from the topography of previous communication systems because they are literally fixed to the Earth like a permanent grid of lines of longitude and latitude. In earlier systems, the perimeter of the beam footprint determined the instantaneous location of a cell.

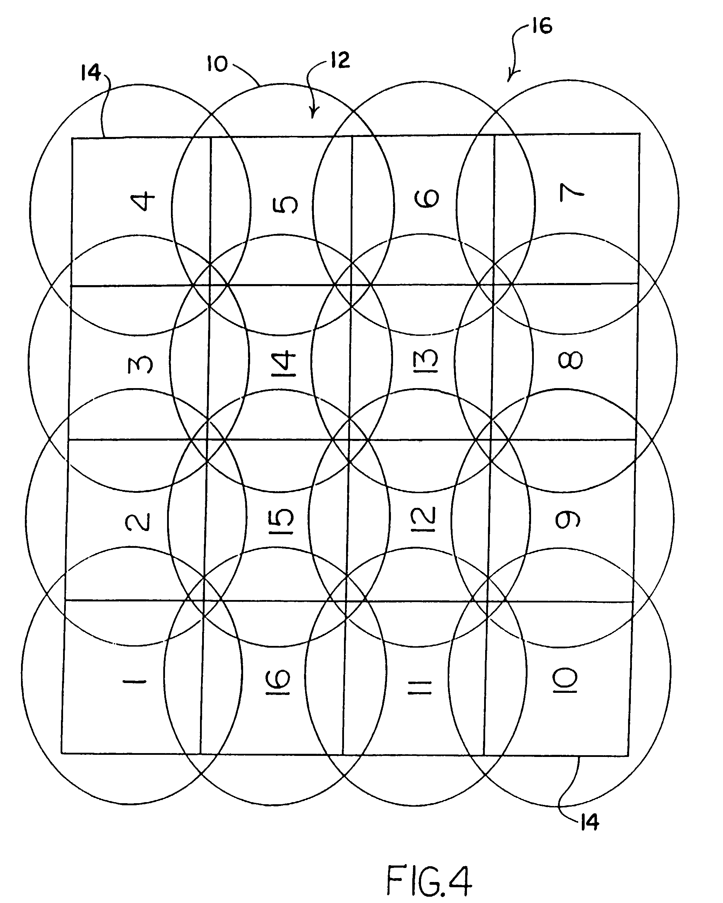

Figure 4 exhibits a pattern 16 that reveals how an Earth-fixed supercell 12 is mapped into sixteen Earth-fixed cells 14, and how the circular footprints 10 from the satellites S cover the square cell regions. The cells 14 in this diagram are also numbered from one to sixteen. These numerals indicate the timing assignments that represent the schedule of sequential satellite transmissions that serve each cell. This cell pattern 16 insures that three inactive cells are always present between every two active cells during normal operations. In the event of a timing skew between satellites servicing adjacent supercells 12, this pattern still provides for a minimum of two inactive cells 14 between active cells 14. This separation is sufficient to eliminate signal interference between two cells 14 which are being illuminated at the same time.

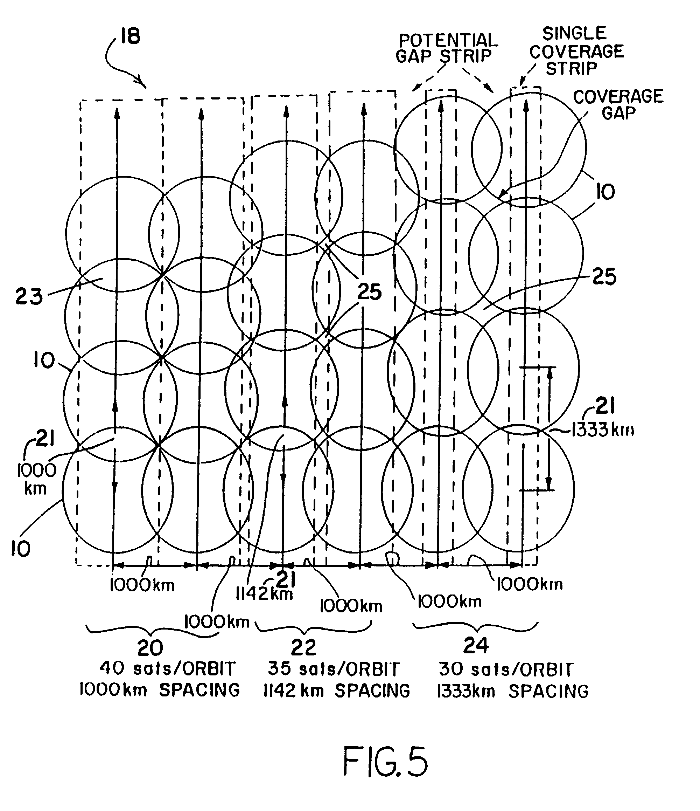

Figure 5 is a diagram 18 that depicts satellite footprint overlaps 23 and gaps 25 at the equator for three different orbit populations. Each footprint has a radius of 700 km, and the orbital planes are spaced at nine degrees, which results in 1,000 km spacing at the equator. Figure 5 presents six columns of overlapping circles. Three pairs of adjacent columns 20, 22 and 24 reveal the coverage gaps that result from different orbit populations. If each orbit in the constellation has 40 satellites, virtually no gaps 25 are encountered, as shown by column pair 20. In this first instance, the footprints 10 are closely packed, and are separated by a distance labeled "21", which is only 1,000 km apart from center to center. The second and central pair of adjoining columns 22 represent the footprints 10 generated when each orbit has only 35 satellites. The footprints 10 depicted in the middle pair of columns are 1,142 km apart when measured from center to center along the path of the orbit. The footprints shown in column pair 22 are separated by small gaps 25. The last pair of columns 24 shows what happens when each orbit has 30 satellites. The spacing between footprints 10, measuring along the orbit path, is now 1,333 km. Consequently, large gaps 25 separate some of the footprints 10 shown in the rightmost pair of columns 24.

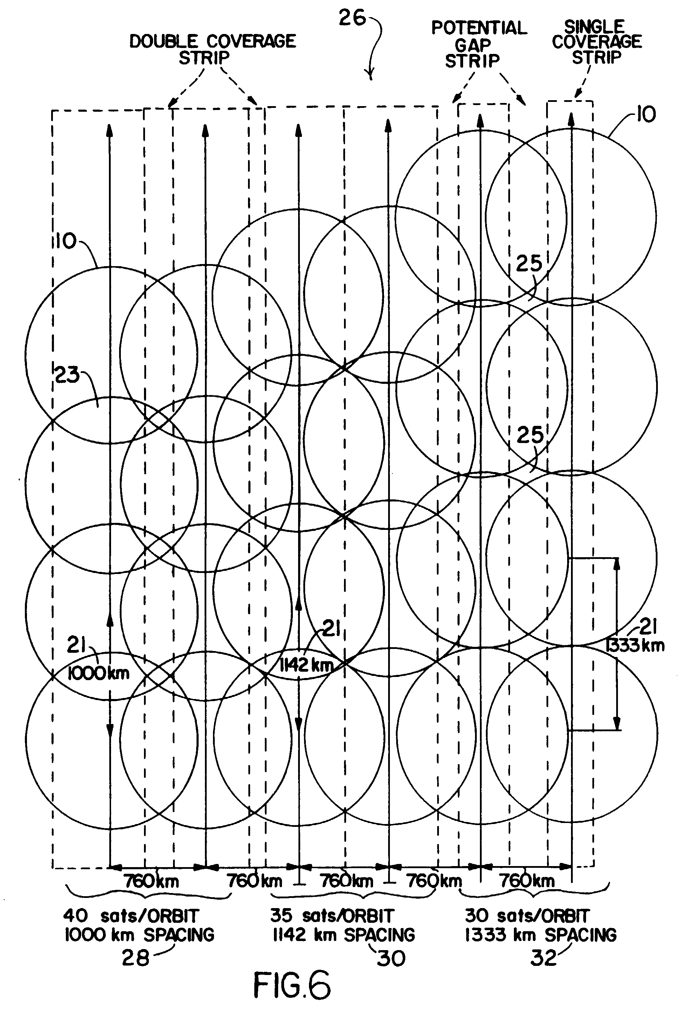

Figure 6 is a depiction 26 of the overlaps 23 and gaps 25 formed by the footprints 10 at a latitude of 40 degrees. The two left columns 28 show that the center-to-center footprint spacing 21 would be 1,000 km for a configuration will forty satellites per orbit; 1,142 km for a configuration 30 with thirty-five satellites per orbit; and 1,333 km for a configuration 32 with thirty satellites per orbit.

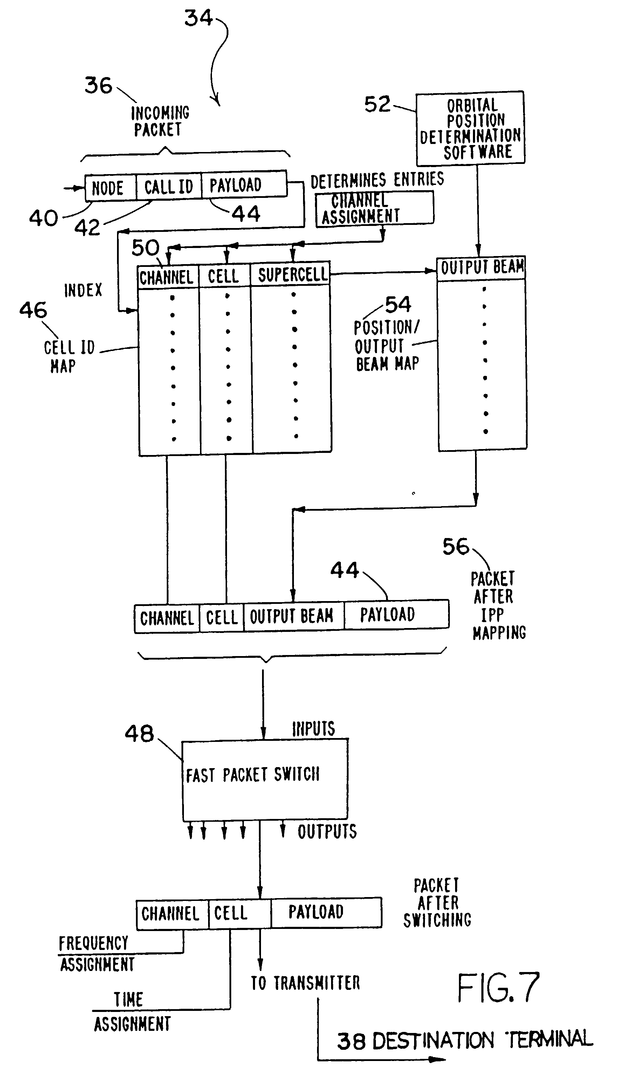

Figure 7 is a flow chart 34 which discloses one implementation of one of the preferred embodiments of beam compensation. A packet 36 is shown as it progresses through mapping and switching hardware which directs the packet 36 to the beam which is currently serving the Earth-fixed supercell 12 and cell 14 in which the destination terminal 38 resides. The incoming packet 36 possesses "node" 40 and "call identification (ID)" 42 bits that comprise a terrestrial location identification about the terminal where the call originated. The packet 36 also contains location information (I) which describes a location on or near the Earth's surface. This location corresponds to a particular portable P, mobile M or fixed F terminal or gateway G that is communicating with a satellite via one of the radio beams 11. The substance of the phone call, such as voice or video information, has been digitized and is carried as the payload portion 44 of the packet 36. The node 40 identifies the satellite S currently serving the destination terminal 38. The cell ID 42 is used as an input to a cell ID map 46, which is used as a translation device for a fast packet switch 48 that actually selects the beam 11 that will be used to deliver the payload 44. The cell ID map 46 identifies the supercell 12, cell 14, and channel 50 assigned to the destination terminal 38 within this node 40 as identified by the call ID 42 in the incoming packet 36. In the present context, a channel 50 is a portion of beam 11 that has been allocated into several frequencies. Output beams are recorded in a position/output beam map 54. The satellite beam 11 which is currently assigned to serve a particular supercell 12 is also a function of the instantaneous position of the satellite S which is generating beams 11 to handle a given call. This position information is produced by autonomous orbit position determination software 52. Once the channel 50, cell 14, and beam assignments have been derived, these assignments are appended to the payload 44 of the packet 36, replacing the call ID 42. After mapping, the modified packet 56 is then transmitted to the fast packet switch 48, which uses this information to direct the modified packet 56 to the appropriate buffer slot in the beam 11 currently serving this supercell 12. The transmission system determines the frequency that will be used for the transmission of the modified packet 56 based on the selected channel, and picks the time slot for transmission based on the selected cell 14.

In one of the preferred embodiments of the beam compensation invention, the time slot is 1.444 milliseconds in duration, and the frequency domain modulation (FDM) cycle for the beams is 23.111 milliseconds long. The time required for communication is 1.156 milliseconds, and 0.289 milliseconds of guard time is provided. The receive beams lag the transmit beams by twice the time encountered by the transit delay between the user and the satellite. This lag time varies from 6.8 milliseconds for supercells at the edge of the footprint to 4.7 milliseconds for supercells directly below the satellite. The variation over a supercell 12 ranges from 0.04 milliseconds for cells 14 directly below the satellite to 0.7 milliseconds for cells 14 at the edge of the footprint.

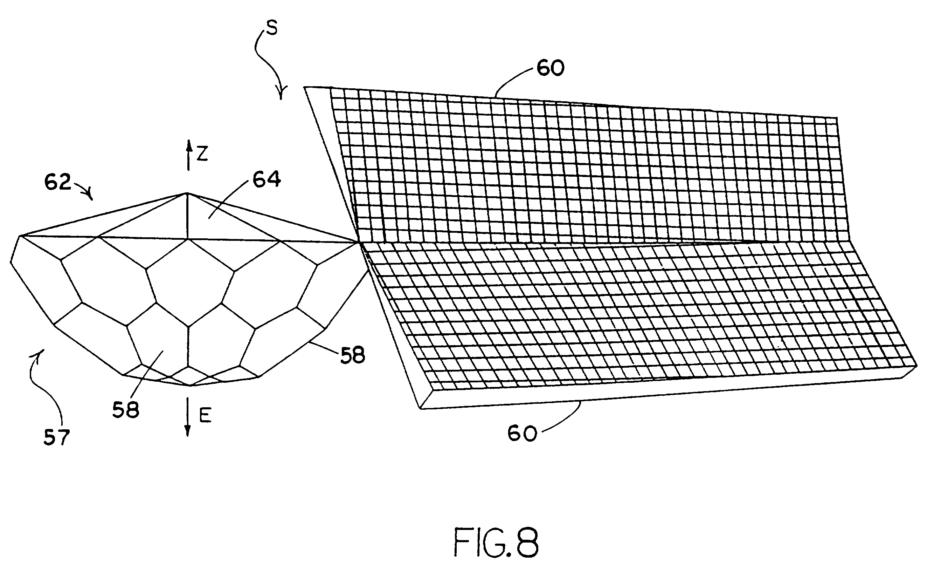

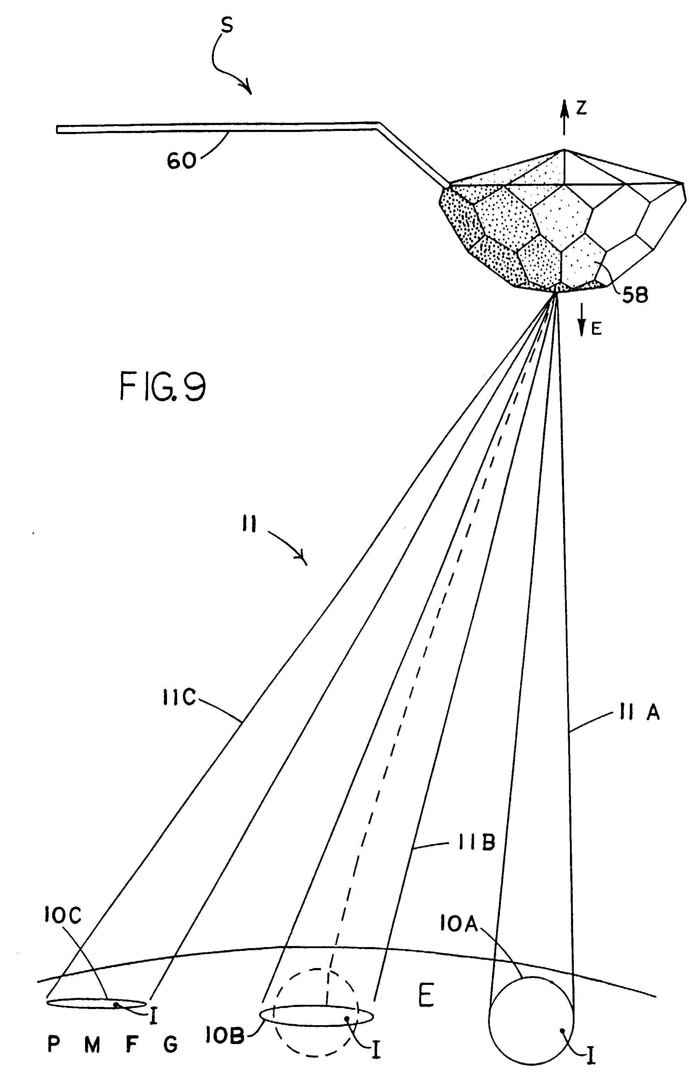

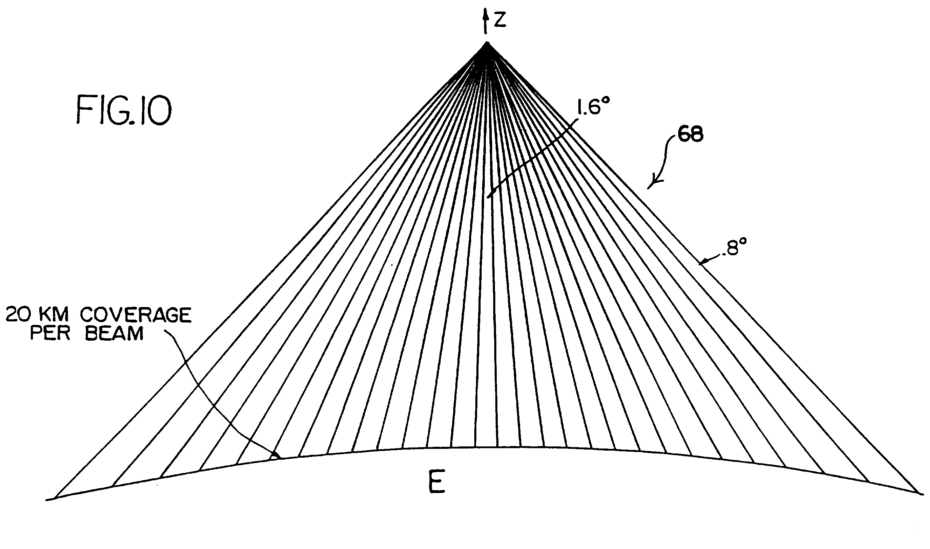

Figure 8 is a schematic diagram of a satellite S that may be used to implement the present invention. The satellite S includes an Earth-facing antenna array 57 comprising generally hexagonal antenna facets 58 and a space-facing array 62 which includes space-facing facets 64 that point toward the Zenith Z. Solar panels 60 coupled to the antenna array 57 furnish electrical power to the spacecraft. Figure 9 reveals a similar satellite S in orbit over the Earth directing a series of electronically steered beams 11A, 11B and 11C to footprints 10 on the ground. Figure 10 depicts a pattern 68 of beams 11 which illuminate the Earth, providing a twenty km coverage per beam 11.

The beams 11 generated by antenna facets on the satellites S include 256 transmit and 256 receive scanning beams. The satellites travel at an orbital height of 700 km and service cells within a 40 degree terminal elevation mask angle footprint. The satellite footprint 10 measures approximately 1.6 million square kilometers. The satellite antenna beams 11 that service cells 14 directly below the satellite S have a gain of 37.7 dB and half power beamwidths of 2.6 degrees. The beams 11 that service cells 14 at the edge of the satellite footprint 10 have a gain of 40 dB and half power beamwidth of 1.8 degrees. The beams illuminate circular spots on the Earth's surface of approximately 800 square kilometers. The square inscribed within this circular spot has an area of 512 square kilometers (22.6 km sides). This geometry provides 1.84 km (13%) of overlap at the cell corners. The overlap 23 mitigates the effects of satellite position errors and beam pointing errors. The tolerable error limits are 300 meters maximum for satellite position determination error and 1.5 km (0.17 degree) maximum for beam pointing errors. The movement of the beam footprint 10 on the Earth's surface due to the motion of the satellite S is less than 12 meters over the 1.444 millisecond dwell time, and less than 200 meters during the 23.111 millisecond supercell timing cycle. Instead of computing the required pointing angles for each spot beam every 1.444 milliseconds, the pointing angles for the center of the supercell may be computed every 23.111 milliseconds, and the beam 11 is then positioned relative to this center for each cell. The rotation of the Earth contributes an error to this computation, but is less than 6% of the effect of satellite motion, and the same method can be used to compensate for this motion. The same method can also be used to compensate for satellite attitude motion (roll, pitch, and yaw). When a supercell 12 is contained within the footprints 10 of two or more satellites, then the satellites S negotiate among themselves as to which ones will service that supercell 12. One satellite may be assigned complete responsibility or the frequency allocation may be divided among several satellites. Each cell 14 is designcd to provide service for up to 720 16-kilobit per second subscribers using portable terminals, and 360 terminals operating at 64-kilobits per second.

The beam compensation invention described above offers several advantages over previous beam allocation systems. Terminals are served by the footprint 10 of the satellite that happens to be passing overhead at the time a particular call flows through a given terminal. By allocating the beams to Earth-fixed cells as opposed to satellite-fixed cells, the problem of performing frequent "hand-offs" from satellite to satellite is substantially eliminated, since a terminal keeps the same frequency (channel) and time slot (cell) for the duration of the call even though it communicates via different beams and satellites during the call. A similar system using satellite-fixed cells with each satellite footprint partitioned into approximately four thousand cells would require a cell hand-off approximately every five seconds. The utilization of the beam compensation invention described above requires these undesirable hand-offs only when a subscriber using a portable P or mobile M terminal actually transits across a cell boundary. The Earth-fixed cell method also avoids the danger of accidentally terminating a call if all of the channels in the cell to which the beams are switched are already occupied. The allocation method of the present invention that switches a call from the beams of one satellite to another is completely transparent to the customer. The Earth-fixed cell technique also offers enormous spectral efficiency, since 100% of the frequencies between the cells and between the satellites are constantly reused. Similar systems using satellite-fixed cells often divide the assigned frequencies into bands assigned to satellites to avoid frequency conflicts, but that procedure is an inefficient use of the valuable frequency spectrum.

### CONCLUSION

Although the present invention has been described in detail with reference to a particular preferred embodiment, persons possessing ordinary skill in the art to which this invention pertains will appreciate that various modifications and enhancements may be made without departing from the scope of the claims that follow. The various orbital parameters and satellite population and configuration statistics that have been disclosed above are intended to educate the reader about one preferred embodiment, and are not intended to constrain the limits of the invention or the scope of the claims. The List of Reference Characters which follows is intended to provide the reader with a convenient means of identifying elements of the invention in the specification and drawings. This list is not intended to delineate or narrow the scope of the claims.

### INDUSTRIAL APPLICABILITY

The *Beam Compensation Methods for Satellite Communication System* described above will help to overcome the limits that circumscribe the performance and potential of existing telephone systems. The system is capable of offering continuous voice, data and video service to customers across the globe on the land, on the sea, or in the air. Instead of merely improving upon or expanding existing land-based systems, the system bypasses centralized terrestrial switching hardware by placing all the intelligence of the network in orbit. Unlike conventional hierarchical networks, which are linked together by a complex web of wires, cables, glass fibers, and microwave repeaters that are very expensive to build and maintain, the present invention liberates the true communications potential of existing land-based networks by routing signals through spacecraft in low Earth orbit. The present invention will revolutionize the telecommunications industry, and offer a wide spectrum of services and industrial opportunities around the world.

### LIST OF REFERENCE CHARACTERS

- 10: Footprints
- 11: Beams
- 12: Earth-fixed supercell
- 14: Earth-fixed cell
- 16: Cell pattern
- 18: Satellite footprint diagram at equator
- 20: Coverage for 40 satellites per orbit at equator
- 21: Footprint spacing
- 22: Coverage for 35 satellites per orbit at equator
- 23: Satellite footprint overlaps
- 24: Coverage for 30 satellites per orbit at equator
- 25: Satellite footprint gaps
- 26: Satellite footprint diagram at 40 degrees
- 28: Coverage for 40 satellites per orbit at 40 degrees
- 30: Coverage for 35 satellites per orbit at 40 degrees
- 32: Coverage for 30 satellites per orbit at 40 degrees
- 34: Flow chart
- 36: Packets
- 38: Destination terminal
- 40: "Node" bits
- 42: "Call identification" bits
- 44: Payload
- 46: Cell ID map
- 48: Fast Packet Switch
- 50: Channel
- 52: Autonomous orbit position determination software
- 54: Position/output beam map
- 56: Modified packet
- 57: Earth facing antenna array
- 58: Hexagonal antenna facets
- 60: Solar panel
- 62: Space-facing array
- 64: Space-facing facets
- 68: Line-of-sight radio waves

- E: Earth
- F: Fixed terminal
- G: Gateway
- I: Location information
- M: Mobile terminal
- P: Portable terminal
- S: Satellite
- Z: Zenith

## Claims

1. A method of continuously allocating a plurality of radiated beams (11) which convey messages in a plurality of packets (36) to a plurality of subscribers identified by location information (I); said plurality of radiated beams (11) being directed toward the Earth's surface from a plurality of satellites (S) moving rapidly relative to the Earth's surface in a low Earth orbit comprising the steps of:
generating said plurality of radiated beams (11) aboard said plurality of satellites (S); each of said plurality of satellites (S) having a plurality of antenna facets (58);
emitting said plurality of radiated beams (11) from each of said plurality of antenna facets (58);
illuminating a plurality of satellite footprints (10) on the surface of the Earth (E);
mapping the surface of the Earth into a plurality of Earth-fixed supercells (12); each of said footprints (10) being associated with a plurality of Earth-fixed supercells (12); each of said plurality of Earth-fixed supercells containing a plurality of Earth-fixed cells (14), each of said plurality of Earth-fixed cells (14) being generally rectangular; and
translating said location information (I) about said subscribers to channel, timing, and frequency assignments for each of said plurality of radiated beams (11) as they are used by said subscribers in one of said Earth-fixed cells (14).

2. A method as claimed in Claim 1, in which
at least eight of said plurality of radiated beams (11) are radiated from each of said plurality of antenna facets (58).

3. A method as claimed in Claim 1 or 2, in which
each of said footprints (10) has a radius of approximately 700 kilometres.

4. A method as claimed in any preceding Claim in which
said plurality of Earth-fixed supercells includes approximately 80,000 Earth-fixed supercells (12).

5. A method as claimed in any preceding Claim, in which
each of said footprints (10) is associated with 256 Earth-fixed supercells (12).

6. A method as claimed in any preceding Claim, in which
each of said plurality of Earth-fixed supercells (12) contains sixteen Earth-fixed cells (14).

7. A method as claimed in Claim 6, in which
said sixteen Earth-fixed cells (14) are arranged in a four by four matrix.

8. A method as claimed in any preceding Claim, in which
a pair of opposite boundaries of each Earth-fixed supercell (12) are parallel to lines of latitude.

9. A method as claimed in any preceding Claim, in which
each satellite includes mapping and switching hardware for directing a packet (36) to a location described by said location information (I) which is on or near the Earth's surface and which corresponds to a portable, mobile or fixed terminal or gateway, wherein a received packet (36) comprises a satellite-identifying node portion (40), a call identification portion (42) and a payload portion (44), and said hardware comprises a fast packet switch (48), a first map (46), which identifies the supercell (12), cell (14) and channel (50) assigned to a destination (38) served by the satellite as identified by said node portion (40), and a second, position/output beam, map (54) which is associated with antonomous position determination software (52), the arrangement being such that, after mapping, the modified packet (56) is supplied to said first packet switch (48) for incorporation in a radiated beam (11).

## Patentansprüche

1. Verfahren zum kontinuierlichen Zuordnen einer Anzahl abgestrahlter Strahlen (11), die Mitteilungen in einer Anzahl Pakete (36) an eine Anzahl durch Ortsinformation (I) gekennzeichnete Teilnehmer liefern; wobei die Anzahl abgestrahlter Strahlen (11) von einer Anzahl Satelliten (S), die schnell relativ zur Erdoberfläche in einer niedrigen Erdumlaufbahn laufen, zur Erdoberfläche gerichtet werden, mit den folgenden Schritten:
- Erzeugen der Anzahl abgestrahlter Strahlen (11) in der Anzahl Satelliten (S), wobei jeder Satellit in der Anzahl Satelliten (S) eine Anzahl Antennenflächen (58) aufweist;
- Emittieren der Anzahl abgestrahlter Strahlen (11) von jeder der Anzahl Antennenflächen (58);
- Beleuchten einer Anzahl Satellitenausleuchtzonen (10) auf der Erdoberfläche (E);
- Kartieren der Erdoberfläche in eine Anzahl erdfeste Überzellen (12), wobei jede der Ausleuchtzonen (10) einer Anzahl erdfester Überzellen (12) zugeordnet ist, wobei jede erdfeste Überzelle innerhalb der Anzahl derselben eine Anzahl erdfester Zellen (14) enthält, wobei jede der Anzahl erdfester Zellen (14) im wesentlichen rechteckig ist; und
- Übersetzen der Ortsinformation (I) zu den Teilnehmern in Kanal-, Zeitpunkts- und Frequenzzuordnungen für jeden der Anzahl abgestrahlter Strahlen (11), wie sie von den Teilnehmern in einer der erdfesten Zellen (14) verwendet werden.

2. Verfahren nach Anspruch 1, bei dem mindestens acht der Anzahl abgestrahlter Strahlen (11) von jeder der Anzahl Antennenflächen (58) abgestrahlt werden.

3. Verfahren nach einem der Ansprüche 1 oder 2, bei dem jede der Ausleuchtzonen (10) einen Radius von ungefähr 700 Kilometern aufweist.

4. Verfahren nach einem der vorstehenden Ansprüche, bei dem die Anzahl erdfester Überzellen ungefähr 80.000 erdfeste Überzellen (12) beträgt.

5. Verfahren nach einem der vorstehenden Ansprüche, bei dem jeder der Ausleuchtzonen (10) 256 erdfeste Überzellen (12) zugeordnet sind.

6. Verfahren nach einem der vorstehenden Ansprüche, bei dem jede der Anzahl erdfester Überzellen (12) 16 erdfeste Zellen (14) enthält.

7. Verfahren nach Anspruch 6, bei dem die 16 erdfesten Zellen (14) in einer 4x4-Matrix angeordnet sind.

8. Verfahren nach einem der vorstehenden Ansprüche, bei dem ein Paar entgegengesetzter Grenzen jeder erdfesten Überzelle (12) parallel zu Breitengraden verläuft.

9. Verfahren nach einem der vorstehenden Ansprüche, bei dem jeder Satellit Kartierungs- und Umschalthardware zum Hinleiten eines Pakets (36) an einen durch die Ortsinformation (I) beschriebenen Ort, der sich auf oder nahe der Erdoberfläche befindet und der einen tragbaren, mobilen oder feststehenden Endgerät oder einer Kopfvermittlung entspricht, wobei ein empfangenes Paket (36) einen Satellitenkennzeichnungs-Knotenteil (40), einen Rufkennzeichnungsteil (42) und einen Gebührenteil (44) umfaßt und die Hardware einen schnellen Paketschalter (48), eine erste Karte (46), die die Überzelle (12), die Zelle (14) und den Kanal (50) kennzeichnet, wie einem Ziel (38) zugeordnet, das durch den durch den Knotenabschnitt (40) gekennzeichneten Satellit bedient wird, und eine zweite, Positions/Ausgabestrahl-Karte (54) umfaßt, die autonomer Positionsermittlungssoftware (52) zugeordnet ist, wobei die Anordnung dergestalt ist, daß das modifizierte Paket (56) nach der Kartierung dem ersten Paketschalter (48) zum Einbau in einen abgestrahlten Strahl (11) zugeführt wird.

## Revendications

1. Procédé d'allocation en continu d'une série de faisceaux hertziens (11) qui acheminent des messages en une série de paquets (36) à une série d'abonnés identifiés par des informations d'emplacement (I); ladite série de faisceaux hertziens (11) étant dirigée vers la surface terrestre à partir d'une série de satellites (S) se déplaçant rapidement par rapport à la surface terrestre sur une orbite basse de la terre, ledit procédé comprenant les étapes suivantes :
on génère ladite série de faisceaux hertziens (11) à bord de ladite série de satellites (S); chacun de ladite série de satellites (S) ayant une série de facettes d'antenne (58);
on émet ladite série de faisceaux hertziens (11) à partir de ladite série de facettes d'antenne (58);
on illumine une série d'empreintes de satellites (10) sur la surface de la terre (E);
on projette la surface de la terre dans une série de supercellules fixes terrestres (12); chacune desdites empreintes (10) étant associée à une série de supercellules fixes terrestres (12); chacune de ladite série de supercellules fixes terrestres contenant une série de cellules fixes terrestres (14); chacune de ladite série de cellules fixes terrestres (14) ayant une forme générale rectangulaire; et on convertit lesdites informations d'emplacement (I) sur lesdits abonnés en affectations de temps, de synchronisation et de fréquence pour chacun de ladite série de faisceaux hertziens (11) lorsqu'elles sont utilisées par lesdits abonnés dans une desdites cellules fixes terrestres (14).

2. Procédé selon la revendication 1, dans lequel au moins huit de ladite série de faisceaux hertziens (11) sont émis par chacune de ladite série de facettes d'antenne (58).

3. Procédé selon la revendication 1 ou 2, dans lequel chacune desdites empreintes (10) a un rayon d'environ 700 kilomètres.

4. Procédé selon l'une quelconque des revendications précédentes, dans lequel ladite série de supercellules fixes terrestres comprend environ 80.000 supercellules fixes terrestres (12).

5. Procédé selon l'une quelconque des revendications précédentes, dans lequel chacune desdites empreintes (10) est associée à 256 supercellules fixes terrestres (12).

6. Procédé selon l'une quelconque des revendications précédentes, dans lequel chacune de ladite série de supercellules fixes terrestres (12) contient seize cellules fixes terrestres (14).

7. Procédé selon la revendication 6, dans lequel lesdites seize cellules fixes terrestres (14) sont agencées sous la forme d'une matrice de quatre par quatre.

8. Procédé selon l'une quelconque des revendications précédentes, dans lequel deux limites opposées de chaque supercellule fixe terrestre (12) sont parallèles à des lignes de latitude.

9. Procédé selon l'une quelconque des revendications précédentes, dans lequel chaque satellite comprend un matériel de projection et de commutation pour diriger un paquet (36) à un emplacement décrit par lesdites informations d'emplacement (I) qui se trouvent sur la surface de la terre ou à proximité de celle-ci et qui correspondent à un terminal ou à une passerelle portable, mobile ou fixe, un paquet reçu (36) comprenant une partie nodale (40) identifiant le satellite, une partie (42) identifiant l'appel et une partie de charge utile (44), et ledit matériel comprenant un commutateur rapide de paquets (48), une première carte de projection (46), qui identifie la supercellule (12), la cellule (14) et le canal (50) affectés à une destination (38) desservie par le satellite tel qu'identifié par ladite partie nodale (40), et une deuxième carte de projection (54) de faisceaux de sortie/position, qui est associée à un logiciel autonome de détermination de position (52), ledit agencement étant tel qu'après projection, le paquet modifié (56) soit délivré audit premier commutateur de paquets (48) pour être incorporé à un faisceau hertzien (11).
